(19) Europäisches Patentamt
European Patent Office
Office européen des brevets

(11) **EP 3 087 386 B1**

(12) **FASCICULE DE BREVET EUROPEEN**

(45) Date de publication et mention
de la délivrance du brevet:
**24.03.2021 Bulletin 2021/12**

(21) Numéro de dépôt: **14819032.5**

(22) Date de dépôt: **24.12.2014**

(51) Int Cl.:
**G01N 29/02** *(2006.01)*  **G01N 29/036** *(2006.01)*
**G01N 29/24** *(2006.01)*  **G01G 17/04** *(2006.01)*

(86) Numéro de dépôt international:
**PCT/EP2014/079301**

(87) Numéro de publication internationale:
**WO 2015/097282 (02.07.2015 Gazette 2015/26)**

(54) **CAPTEUR DE GAZ GRAVIMETRIQUE A LIMITE DE DETECTION ABAISSEE**

GRAVIMETRISCHER GASSENSOR MIT NIEDRIGER NACHWEISGRENZE

GRAVIMETRIC GAS SENSOR HAVING A LOWERED DETECTION LIMIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.12.2013 FR 1363628**

(43) Date de publication de la demande:
**02.11.2016 Bulletin 2016/44**

(73) Titulaires:
• **Commissariat à l'Énergie Atomique
et aux Énergies Alternatives
75015 Paris (FR)**
• **APIX Analytics
38040 Grenoble (FR)**

(72) Inventeurs:
• **MATHERON, Muriel
F-73000 Chambéry (FR)**
• **BARATTIN, Régis
F-38000 Grenoble (FR)**
• **JOUSSEAUME, Vincent
F-38700 Le Sappey-en-Chartreuse (FR)**
• **RICOUL, Florence
F-38950 Quaix-en-Chartreuse (FR)**

(74) Mandataire: **Brevalex
95, rue d'Amsterdam
75378 Paris Cedex 8 (FR)**

(56) Documents cités:
**WO-A1-98/32006  FR-A1- 2 918 997
US-A1- 2011 113 855**

• **ARCAMONE J ET AL: "VLSI silicon multi-gas
analyzer coupling gas chromatography and
NEMS detectors", ELECTRON DEVICES
MEETING (IEDM), 2011 IEEE INTERNATIONAL,
IEEE, 5 décembre 2011 (2011-12-05), pages
29.3.1-29.3.4, XP032096029, DOI:
10.1109/IEDM.2011.6131637 ISBN:
978-1-4577-0506-9**

**Description**

**DOMAINE TECHNIQUE ET ART ANTÉRIEUR**

La présente invention se rapporte à un capteur de gaz de type gravimétrique à limite de détection abaissée.

Les capteurs de gaz de type gravimétrique comportent des transducteurs gravimétriques revêtus d'une couche active chimiquement dont le rôle est de capter et concentrer les gaz cibles, de manière éventuellement réversible et éventuellement sélective. Le transducteur convertit la masse adsorbée en un signal électrique (variation de fréquence). Les performances du capteur en termes de résolution et limite de détection dépendent non seulement de la conception du capteur, par exemple elles dépendent des paramètres géométriques, des modes de vibration..., mais également de l'affinité de la couche active envers les gaz.

Les capteurs gravimétriques les plus courants sont les microbalances à quartz (ou QCM) revêtues de polymères organiques. La surface active du QCM est de l'ordre de 0,2 cm$^2$.

Il existe également des capteurs de gaz à base de structure microélectromécanique (MEMS) ou nanoélectromécanique (NEMS) mettant en œuvre des poutres résonantes.

Un tel capteur à gaz peut être disposé en sortie d'une colonne de chromatographie en phase gazeuse et assurer la détection de chaque constituant du gaz préalablement séparé par la colonne.

Par rapport aux microbalances à quartz, les dimensions nanométriques des NEMS améliorent considérablement les performances des capteurs.

On cherche néanmoins à encore abaisser les limites de détection de capteurs gravimétriques.

Un capteur de gaz gravimétrique comportant les caractéristiques du préambule de la revendication 1 est décrit dans le document US 2011/113855.

**EXPOSÉ DE L'INVENTION**

C'est un but de la présente invention de réaliser un capteur de gaz gravimétrique de type NEMS offrant une limite de détection abaissée.

Le but précédemment énoncé est atteint par un capteur de gaz gravimétrique comprenant une structure nanoélectromécanique comportant au moins une partie suspendue, ladite partie suspendue étant recouverte au moins en partie par une couche en un matériau poreux ayant une porosité comprise entre 3 % et 50 %, avantageusement entre 5% et 40%.

De préférence l'épaisseur de la couche poreuse est comprise entre 10 nm et 200 nm.

Le matériau poreux est de type SiOxCyHz.De manière avantageuse, la couche en matériau poreux est formée par dépôt chimique ou physique en phase vapeur, évitant les risques de stiction entre la partie suspendue et le substrat.

De façon alternative, la couche en matériau poreux est formée par pulvérisation, ce qui permet de déposer des matériaux tels que le Graphite, SiOw, w variant entre 0 et 2.

En d'autres termes, le détecteur de gaz est formé par un dispositif nanoélectromécanique comprenant une partie sensible fonctionnalisée au moyen d'une couche poreuse, ce qui augmente la quantité de composé absorbé et abaisse la limite de détection.

La présente invention a alors pour objet un capteur de gaz gravimétrique comportant une structure nanoélectronique comprenant une partie fixe, au moins une partie suspendue par rapport à la partie fixe, des moyens d'excitation de sorte à mettre en vibration la partie suspendue par rapport à la partie fixe, des moyens de détection des variations de vibration de ladite partie suspendue, une couche de fonctionnalisation poreuse recouvrant une partie au moins de la partie suspendue, la porosité de ladite couche de fonctionnalisation étant comprise entre 3% et 50%.

De préférence, la porosité de la couche de fonctionnalisation est comprise entre 5% et 40%.

La couche de fonctionnalisation est avantageusement comprise entre 10 nm et 200 nm.

La couche de fonctionnalisation est en un matériau de type SiOxCyHz, avec

- x compris entre 1 et 2, de préférence entre 1,4 et 1,8,
- y compris entre 0,8 et 3, de préférence entre 1 et 2,5,
- z compris entre 2,5 et 4,5, de préférence entre 3 et 4,1.

La couche de fonctionnalisation est par exemple présente sur au moins une partie d'une face de la partie suspendue opposée à la partie fixe, avantageusement sur toute la face de la partie suspendue opposée à la partie fixe.

Les moyens d'excitation sont par exemple des moyens électrostatiques, et les moyens de détection sont par exemple des moyens piézoélectriques.

La présente invention a également pour objet un ensemble d'analyse comportant une colonne de chromatographie en phase gazeuse et au moins un capteur de gaz gravimétrique selon l'invention disposé en sortie de ladite colonne.

La présente invention a également pour objet un procédé de réalisation d'un capteur de gaz gravimétrique selon l'invention, comportant :

- la réalisation de la structure nanoélectronique,
- la formation de la couche de fonctionnalisation présentant une porosité comprise entre 3% et 50 %, sur une partie au moins de la partie suspendue de la structure nanoélectronique.

La couche de fonctionnalisation est obtenue par exemple par dépôt chimique en phase vapeur. Lors du dépôt chimique en phase vapeur un agent porogène peut être mis en œuvre. Le niveau de porosité peut être fixé en fonction du débit de porogène. L'agent porogène comporte par exemple des molécules organiques telles que le norbornadiène, le norbornène, l'alpha terpinène, le cyclohexène oxyde, le cyclopentène oxyde, le trivertal...

La formation de la couche de fonctionnalisation peut être obtenue en introduisant dans une enceinte un précurseur et un agent porogène, en appliquant un traitement plasma et ensuite en effectuant un traitement thermique pour oxyder l'agent porogène.

La formation de la couche de fonctionnalisation peut avoir lieu après libération de la structure nanoélectronique.

## BRÈVE DESCRIPTION DES DESSINS

La présente invention sera mieux comprise à l'aide de la description qui va suivre et des dessins en annexe sur lesquels :

- la figure 1A est une vue de côté représentée schématiquement d'un exemple du NEMS pouvant être mis en œuvre dans le détecteur selon l'invention,
- la figure 1B est une vue de dessus du NEMS de la figure 1A,
- la figure 2 est une représentation schématique de l'installation d'analyse mettant en œuvre au moins un détecteur selon l'invention,

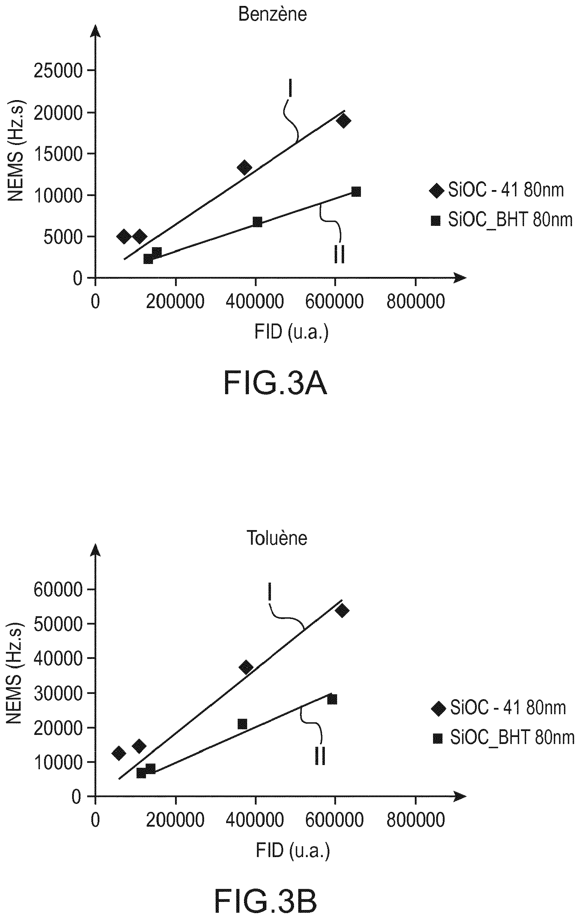

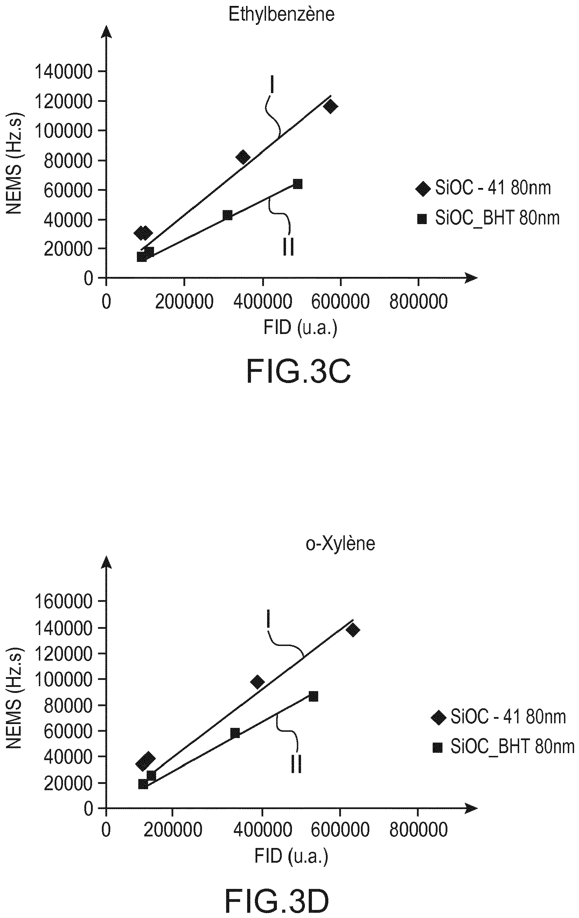

- les figures 3A à 3D sont des représentations graphiques de l'aire des pics délivrés par le détecteur selon l'invention en fonction de l'aire des pics délivrés par un capteur FID pour deux porosités, pour le benzène, le toluène, l'éthylbenzène et le o-Xylène respectivement,
- les figures 4A à 4D sont des représentations graphiques l'aire des pics délivrés par le détecteur selon l'invention en fonction de l'aire des pics délivrés par un capteur FID pour différentes épaisseurs, pour le benzène, le toluène, l'éthylbenzène et le o-Xylène respectivement,
- les figures 5A à 5F sont des représentations schématiques d'étapes de réalisation d'un capteur selon un exemple de procédé de réalisation.

## EXPOSÉ DÉTAILLÉ DE MODES DE RÉALISATION PARTICULIERS

A des fins de simplicité la structure nanoélectromécanique sera désignée NEMS dans la suite de la description.

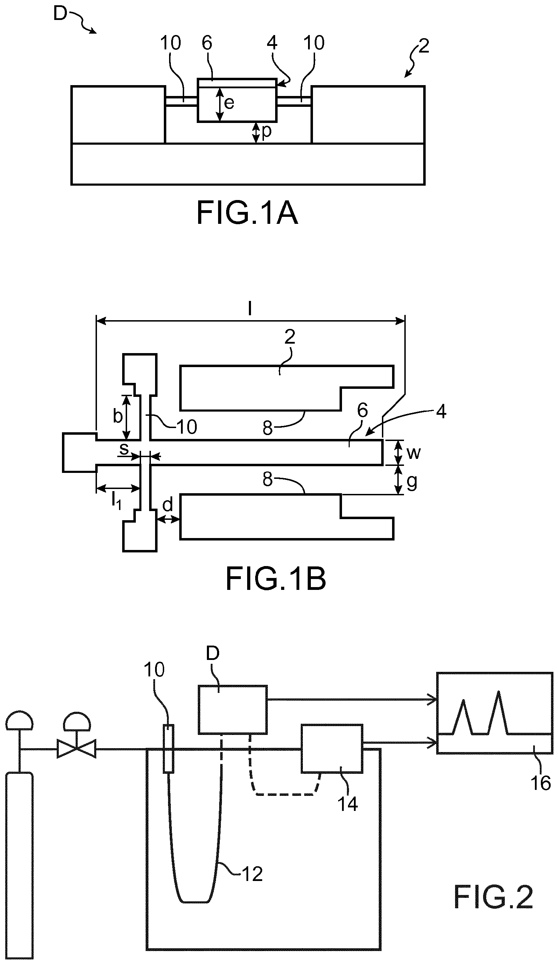

Sur la figure 1 on peut voir une représentation schématique d'un exemple de réalisation d'un détecteur gravimétrique D selon l'invention comprenant un NEMS comportant une partie fixe 2 et une partie suspendue 4 destinée à être mise en vibration par rapport à la partie fixe. Dans l'exemple représenté, la partie suspendue 4 est formée par une poutre ancrée par une extrémité longitudinale 4.1 sur la partie fixe 2. Le détecteur D comporte également une couche 6 de matériau poreux recouvrant au moins en partie la partie suspendue 4. La couche poreuse 6 sera désignée par la suite "couche de fonctionnalisation".

A titre d'exemples dans le tableau T1 ci-dessous sont donnés deux exemples de dimensionnement NEMS1 et NEMS2 en $\mu$m du NEMS, les dimensions étant indiquées sur les figures 1A et 1B. $f_0$ est la fréquence de résonance du NEMS.

|  | e | p | l | w | s | g | $f_0$ |
|---|---|---|---|---|---|---|---|
| **NEMS1** | 0,160 | 0,400 | 5 | 0,3 | 0,08 | 0,2 | 20 |
| **NEMS2** | 0,160 | 0,400 | 3,2 | 0,3 | 0,08 | 0,15 | 55 |

Le détecteur comporte également des moyens d'excitation destinés à mettre en vibration la partie suspendue 4 et des moyens de détection de la variation de fréquence de vibration de la partie suspendue due à la masse adsorbée. Dans l'exemple représenté, les moyens d'excitation sont de type électrostatique comportant des électrodes 8 portées par la partie fixe 2 en regard des faces latérales de la poutre 4.

Dans l'exemple représenté, les moyens de détection sont de type piézorésistif, formés par deux jauges piézorésistives 10 reliant la partie suspendue à la partie fixe et déformées par les vibrations de la partie suspendue. La déformation des jauges provoque une variation de la résistance électrique mesurée au sein de chaque jauge. Il est alors possible de corréler cette variation de fréquence de vibration à un composé donné. La mise en œuvre de deux jauges assure avantageusement une mesure différentielle, ce qui permet de s'affranchir par exemple des variations des conditions extérieures telles que les variations de température. En variante, une seule jauge pourrait être mise en œuvre.

Dans un autre exemple, les moyens de détection sont de type capacitif et comportent par exemple une électrode sur la partie fixe en regard de la partie suspendue et formant avec elle un condensateur dont la capacité varie avec la vibration de la partie suspendue. D'autres moyens de détection peuvent être mis en œuvre.

En variante, le NEMS pourrait comporter plusieurs parties suspendues. En outre, la partie suspendue pourrait être une membrane reliée à la partie fixe 2 par des moyens de suspension.

Par ailleurs, un détecteur comportant plusieurs NEMS ne sort pas du cadre de la présente invention.

Dans l'exemple représenté et de manière avantageuse, la couche 6 recouvre toute la face supérieure de la partie suspendue 4.

La couche 6 peut recouvrir également la face inférieure en tout ou partie et les flancs en tout ou partie. En outre, la couche poreuse peut recouvrir en tout ou partie la partie fixe.

La couche poreuse présente une porosité comprise entre 3% et 50 %, de préférence entre 5% et 40%. Les inventeurs ont déterminé que la gamme de porosité [3% ; 50%] et de manière préférée [5%; 40%] permettaient d'offrir la meilleure sensibilité. De préférence les pores présentent un rayon compris entre 1 nm et 3 nm, voire compris entre 1 nm et 5 nm. Ces dimensions ont été observées par ellipsoporosimétrie, la molécule sonde étant le Toluène, le dispositif de mesure étant le modèle EP12 - Société SOPRA.

Ce pourcentage représente le volume des pores pour un volume de matériau donné.

De préférence l'épaisseur de la couche 6 est comprise entre 10 nm et 200 nm.

La masse d'une couche de fonctionnalisation ayant une épaisseur inférieure à 200 nm a une influence négligeable sur la partie suspendue. Une épaisseur de couche de fonctionnalisation poreuse supérieure à de 10 nm permet l'absorption d'une quantité de composé plus facilement détectable.

Selon l'invention, le matériau poreux est de type SiOCH. Le terme désigne un composé de formule SiOxCyHz avec :

- x compris entre 1 et 2, de préférence entre 1,4 et 1,8,
- y compris entre 0,8 et 3, de préférence entre 1 et 2,5,
- z compris entre 2,5 et 4,5, de préférence entre 3 et 4,1.

Selon un exemple qui n'appartient pas à l'invention, le matériau poreux peut être de type SiO. Le terme désigne un composé de formule SiOw, avec w compris entre 0 et 2. Précisons qu'un tel composé peut être obtenu soit par pulvérisation, soit en appliquant un plasma oxydant sur une couche de SiOxCyHz précédemment décrite, afin d'éliminer les groupements Méthyle. La couche poreuse est destinée à absorber les molécules de gaz à détecter. Le matériau poreux présente une porosité ouverte, les pores communiquant les uns avec les autres.

De manière préférée, la couche poreuse, en particulier le SiOCH, est déposée par dépôt en phase vapeur, en particulier un dépôt chimique en phase vapeur ou CVD ("Chemical Vapor Déposition" en terminologie anglo-saxonne). Le dépôt de SiOxCyHz présente alors une épaisseur homogène au moins sur surface supérieure de la partie suspendue.

Alternativement, des matériaux poreux, tels SiO, peuvent être déposés par pulvérisation. C'est également le cas de matériaux poreux tels le Graphite ou l'Alumine.

La réalisation de la couche poreuse en SiOCH par CVD permet très avantageusement de supprimer les risques de stiction qui peuvent apparaître entre la partie suspendue et la partie fixe lors de la réalisation d'une couche par dépôt en phase liquide. Les effets de capillarité dus à l'utilisation de solvants peuvent en effet entraîner un collage irréversible des nanostructures. Par ailleurs grâce au dépôt CVD, il est possible d'atteindre des épaisseurs de couche poreuse au moins égales à 10 nm, ce qui n'est le cas lors d'un dépôt en phase liquide.

En outre, grâce au dépôt CVD, il est possible de contrôler aisément l'épaisseur du matériau déposé avec le temps de dépôt.

De plus, les couches en SiO et SiOCH par dépôt CVD offrent une très bonne stabilité thermique. Ceci est particulièrement intéressant dans le cas où les NEMS sont placés en sortie d'une colonne de chromatographie en phase gazeuse, voire à l'intérieur de la colonne de chromatographie en phase gazeuse, ils peuvent alors être exposés à un flux de gaz porté à une température supérieure à la température ambiante, par exemple à une température comprise entre 40°C et 300°C typiquement. Les matériaux déposés par dépôt CVD restent stables à ces niveaux de température, à l'inverse de certains polymères, qui, à ces températures, sont susceptibles de se dégrader chimiquement ou de voir leurs propriétés mécaniques évoluer : par exemple, une fusion ou une cristallisation peuvent se produire, conduisant à une modification significative du module d'Young, ce qui peut perturber le fonctionnement du NEMS, dont la fréquence de résonance est fonction non seulement de sa masse effective mais aussi de sa rigidité et des contraintes subies par le résonateur.

Un NEMS fonctionnalisé au moyen d'une couche de SiO ou de SiOCH présente alors une réponse purement gravimétrique, alors que dans le cas d'un NEMS fonctionnalisé avec certains polymères organiques, l'influence des propriétés mécaniques des couches déposées sur la réponse du NEMS ne sont pas négligeables.

Les couches en SiOCH poreux ou SiO poreux présentent une bonne stabilité chimique, évitant une dérive de la ligne de base du capteur.

Par exemple, il a été observé qu'une couche de SiOCH dit « low k » poreux déposée par PECVD ne voit pas sa constante diélectrique évoluer sur une période de plusieurs semaines, ce qui indique une bonne stabilité dans le temps, notamment envers l'humidité ambiante. Le terme low K désigne des matériaux de faible permittivité diélectrique, typiquement inférieure à 2,5.

Enfin, les équipements de dépôt CVD étant adaptés pour des dépôts sur des substrats en 200 mm diamètre voire 300 mm, il est possible de réaliser des dépôts de couches de fonctionnalisation collectifs de plusieurs capteurs.

Selon une variante avantageuse, le dépôt peut être réalisé par dépôt chimique en phase vapeur assisté par filament ou FACVD (Filament Assisted Enhanced Chemical Vapor Deposition en terminologie anglo-saxonne), ce qui permet d'améliorer encore la conformité.

Selon une autre variante, le dépôt peut être réalisé par dépôt chimique en phase vapeur d'une première couche comprenant le SiOCH et l'agent porogène, suivi par dépôt chimique en phase vapeur d'une deuxième couche de manière à constituer une deuxième couche étanche au gaz. On réalise ensuite une étape de moussage, qui permet la formation de pores dans la couche de SiOCH. La deuxième couche est ensuite éliminée. Un tel procédé est décrit dans la demande de brevet FR2918997.

Le dépôt de la couche de SiOCH poreux peut être réalisé dans un équipement PECVD de type connu.

Les précurseurs pour la matrice sont par exemple des précurseurs organosilicés tels que le DEMS (diethoxyméthylsilane), le tetramethyl-cyclotetrasiloxane, le dimethyl-dioxiranyl-silane, le diethoxy-methyl-oxiranyl-silane, ...). Le précurseur est soumis à un plasma et est vaporisé dans l'enceinte de l'équipement PECVD. Il se fragmente en formant des radicaux qui se déposent au moins sur la surface de l'élément suspendu du NEMS, ensuite ces radicaux réagissent entre eux pour former un film.

Afin de réaliser une couche poreuse, un agent porogène peut avantageusement être mis en œuvre, par exemple du NBD (Norbornadiène). Alternativement il peut s'agir de molécules organiques comme par exemple le norbornène, l'alpha terpinène, le cyclohexène oxyde, le cyclopentène oxyde, le trivertal...

L'agent porogène subit également le traitement plasma, il forme alors des inclusions dans la couche formée par le précurseur. Lors d'un recuit ultérieur, l'agent porogène est éliminé formant les pores dans la couche et la matrice est réticulée.

La durée du dépôt est ajustée pour obtenir l'épaisseur souhaitée.

Le dépôt est suivi d'une étape de recuit qui permet d'éliminer l'agent porogène et de réticuler la matrice. Par exemple, le recuit dure quelques minutes sous UV à 400°C. La durée du recuit est ajustée en fonction de l'épaisseur de matériau à traiter.

Le niveau de porosité est contrôlé en maîtrisant le débit de précurseurs et d'agent porogène.

L'ajout d'un agent porogène au cours du dépôt en phase vapeur permet de maîtriser la porosité et d'avoir une faible dispersion dans les pores de la couche de fonctionnalisation.

Une porosité d'au moins 3% peut être obtenue en mettant en œuvre ou pas un agent porogène, la mise en œuvre d'un agent porogène peut dépendre des valeurs des différents paramètres de la formation de la couche poreuse. Par exemple dans le cas d'un dépôt CVD, le niveau de porosité peut dépendre de la pression régnant dans l'enceinte de CVD, de la température du substrat, de la puissance plasma et/ou du débit de précurseurs et/ou des débits des gaz tels que l'oxygène ou l'hélium.

L'affinité de la couche envers le toluène va être calculée pour des couches de fonctionnalisation de SiOCH ayant différentes porosités. Plus le coefficient de partage K d'une couche de matériau est grand, plus l'affinité de cette couche avec le toluène est grande.

L'affinité de la couche envers le toluène est caractérisée par le coefficient de partage K défini par : K = [toluène dans la couche] / $\Delta C$.

$$\text{On montre que } K = \Delta f / (Se\Delta C)$$

avec

$\Delta$C la variation de concentration du gaz (en g/cm$^3$).

S la sensibilité d'une microbalance à quartz, égale à 2.26 10$^8$ Hz cm$^2$/ g

e l'épaisseur de la couche (en cm).

Les valeurs du coefficient de partage K sont rassemblées dans le tableau T2 ci-dessous.

**Tableau T2 : valeurs du coefficient de partage K pour différents valeurs de porosité d'une couche de SiOCH**

|  | Porosité | K dans la gamme de concentration xx xx ppm |
|---|---|---|
| SiOCH | 27% | 6400 |
| SiOCH | 3% | 1900 |
| SiOCH | 0.6% | 900 |

On constate qu'une couche poreuse selon l'invention présente un coefficient de partage élevé par rapport à une couche de très faible porosité, 0,6% dans le cas considéré.

Par conséquent, grâce à la présente invention, le capteur présente une bonne, voire très bonne affinité par rapport au toluène, c'est-à-dire qu'il présente une bonne, voire très bonne aptitude à capter le toluène. Il pourrait être montré que pour d'autres gaz tels que le benzène, l'éthylbenzène et l'o-xylène, le coefficient K aurait de valeurs similaires.

Ainsi, on considère qu'en dessous de 3%, la porosité n'est pas suffisante pour conférer au matériau une sensibilité suffisante.

Afin de montrer l'efficacité du détecteur de gaz comportant un NEMS présentant un partie sensible suspendu muni d'une couche de fonctionnalisation poreuse, selon l'invention, des mesures de détection de composés aromatiques ont été effectuées sur un détecteur comportant un NEMS comportant une couche de SiOCH déposée comme décrit ci-dessus.

Pour cela, a été utilisé une installation représentée schématiquement sur la figure 2, comportant un injecteur 10 permettant l'injection d'un mélange liquide de composés aromatiques : les composés liquides sont vaporisés dans la chambre de l'injecteur 10 et les vapeurs ainsi obtenues sont injectées dans la chaîne de mesure, une colonne de chromatographie en phase gazeuse 12 permettant de séparer chaque constituant du mélange injecté, un détecteur NEMS D fonctionnalisé avec une couche de SiOCH situé en sortie de la colonne chromatographie en phase gazeuse 12. Le détecteur NEMS D assure la détection de chaque constituant préalablement séparé dans la colonne de chromatographie 12, et un détecteur de référence 14, dans le cas présent un détecteur par ionisation à flamme (ou FID) est prévu en aval du NEMS. Le détecteur FID est utilisé pour contrôler la quantité de matière en sortie de colonne. Le détecteur D et le détecteur de référence 14 sont reliés à un enregistreur 16.

Dans le tableau T3 ci-dessous, sont réunies les valeurs de masse détectable en ng correspondant à la limite de détection du NEMS fonctionnalisé pour deux épaisseurs 30 nm et 180 nm de couche de SiOCH ayant une porosité de 27% et pour quatre composés : le benzène, le toluène, l'éthylbenzène et l'o-xylène.

**Tableau T3 : masse détectable par un détecteur NEMS comportant une couche de fonctionnalisation en SiOC présentant une porosité de 27%.**

|  |  | Masse détectable (ng) |
|---|---|---|
| **NEMS unitaire SiOC-41-30nm** | Benzène | 5,541 |
|  | Toluène | 3,149 |
|  | Ethylbenzène | 2,357 |
|  | o-Xylène | 2,695 |
| **NEMS unitaire SiOC-41-180nm** | Benzène | 0,391 |
|  | Toluène | 0,228 |
|  | Ethylbenzène | 0,189 |
|  | o-Xylène | 0,393 |

La limite de détection des détecteurs selon l'invention est abaissée par rapport à des détecteurs de gaz de l'état de la technique.

Sur les courbes 3A à 3D, on peut voir représentée l'aire des pics obtenus par la mesure gravimétrique réalisée au moyen du détecteur NEMS en Hz.s en fonction de l'aire du pic obtenu par FID en unités arbitraires pour des couches de SiOCH de 80 nm d'épaisseur et présentant une porosité de 27% (courbe I) et de 3% (courbe II). La courbe 3A représente la détection du benzène, la courbe 3B représente la détection du toluène, la courbe 3C représente la détection de l'Ethylbenzène, et la courbe 3D représente la détection de l'o-Xylène.

L'aire du pic FID est proportionnelle à la masse totale de composé détecté.

Le gain en masse absorbé par une couche de SiOCH d'une porosité de 27% par rapport à une couche de SiOCH d'une porosité de 3 % est de 2 pour le benzène, de 1,8 pour le toluène, de 1,6 pour l'éthylbenzène et de 1,4 pour l'o-Xylène.

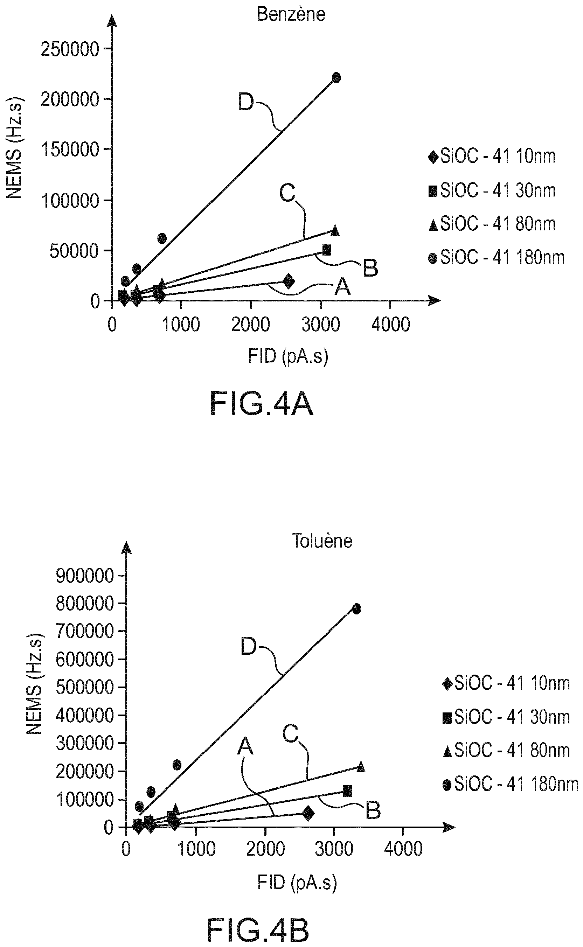

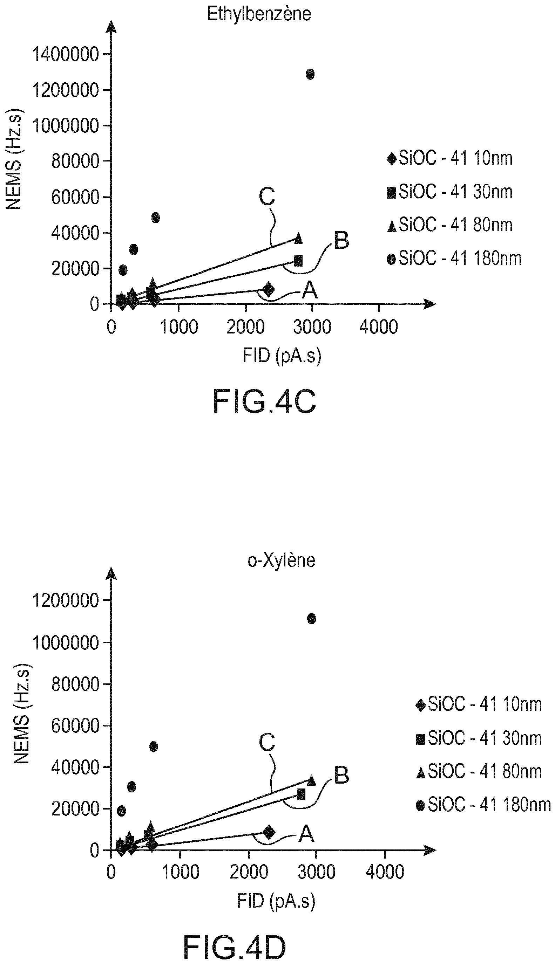

Sur les figures 4A à 4B, peut voir représentée l'aire des pics obtenus par la mesure gravimétrique réalisée au moyen du NEMS en Hz.s en fonction de l'aire du pic obtenu par FID en pA.s (unités arbitraires) pour des couches de SiOCH de porosité 27% et d'épaisseur croissante, à savoir 10 nm (courbe A), 30 nm (courbe B), 80 nm (courbe C) et 180 nm (courbe D). La figure 4A représente la détection du benzène, la figure 4B représente la détection du toluène, la figure 4C représente la détection de l'Ethylbenzène, et la figure 4D représente la détection de l'o-Xylène.

Le tableau T4 ci-dessous regroupe les gains en masse absorbée en toluène calculés entre différents épaisseurs. Par exemple, la première colonne se rapporte au gain entre une couche de 30 nm et une couche de 10 nm, celui-ci est de 2.

**Tableau T4 : gain de masse détectée en fonction de l'épaisseur de la couche de SiOCH 27%**

|  | Gain SiOC-41 30nm/10nm | Gain SiOC-41 80nm/30nm | Gain SiOC-41 180nm/30nm |
|---|---|---|---|
| **Toluène** | $\times 2$ | $\times 1,6$ | $\times 5,9$ |

Le matériau de la couche de fonctionnalisation présente un coefficient de partage par rapport au toluène d'au moins 1900. Avantageusement, pour une épaisseur d'au moins 10 nm, le produit Kxe est au moins égal à $1900 \times 10.10^{-7}$ cm = $19.10^{-4}$ cm pour le toluène.

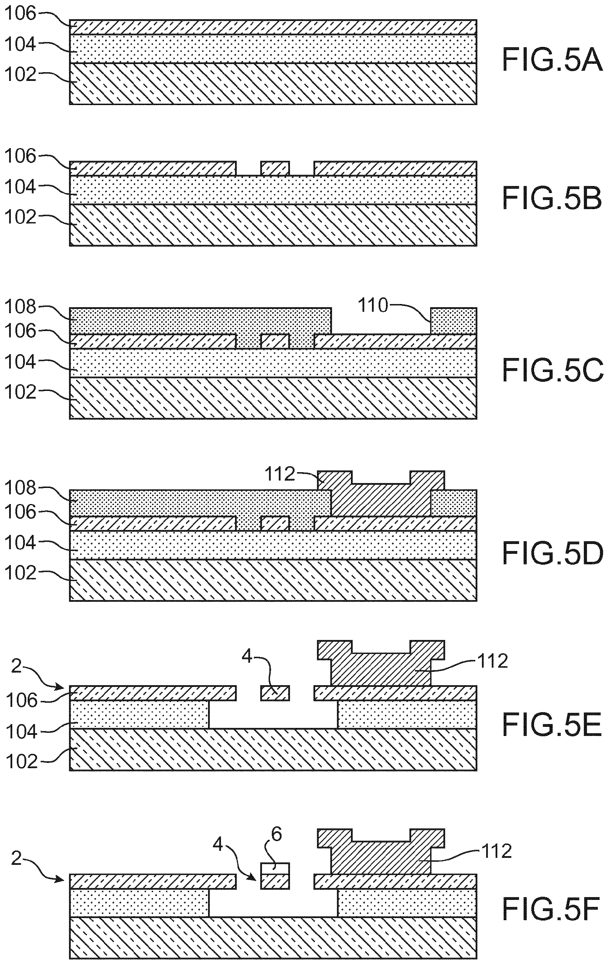

Nous allons maintenant décrire un exemple de procédé de réalisation d'un détecteur NEMS selon l'invention au moyen des figures 5A à 5F.

Par exemple, un substrat SOI (Silicon-On-Insulator) est utilisé. Il comporte un substrat en silicium 102, un couche de diélectrique 104 par exemple du $SiO_2$ et une couche de silicium monocristallin 106. La couche 104 a par exemple une épaisseur de 400 nm et la couche 106 a par exemple une épaisseur de 160 nm. La couche 106 peut être dopée p par implantation de ions bores à $1,5.10^{19}$ at./cm$^3$.

Le substrat SOI est représenté sur la figure 5.

Lors d'une étape suivante a lieu la réalisation du NEMS pour cela une étape de lithographie et une étape de gravure ont lieu sur la couche 106.

Avantageusement, la lithographie est une lithographie hybride par exemple lithographie e-beam et DUV ce qui permet la structuration de grandes surfaces avec des structures dont les dimensions peuvent être inférieures à 80 nm, voire 50 nm.

La gravure est par exemple une gravure anisotropique.

L'élément ainsi obtenu est représenté sur la figure 5B.

Lors d'une étape suivante, une couche d'un diélectrique 108, par exemple du $SiO_2$ est formée sur le couche 106 structurée. Cette couche est ensuite structurée par lithographie et gravure pour accéder à la couche 106 dans des zones 110.

L'élément ainsi obtenu est représenté sur la figure 5C.

Lors d'une étape suivante, un couche 114 de matériau conducteur par exemple un matériau métallique, par exemple du AISi est formée sur la couche 110 afin de former des plots de contact, en particulier dans la zone 110 permettant l'accès à la couche 106. La couche 112 a par exemple une épaisseur de 650 nm. Cette couche est ensuite structurée formant ainsi des plots en contact 114.

L'élément ainsi obtenu est représenté sur la figure 5D.

Lors d'une étape suivante, le NEMS est libéré, en particulier sa partie suspendue, par exemple par acide fluorhydrique vapeur.

L'élément ainsi obtenu est représenté sur la figure 5E.

Lors d'une étape suivante une couche de fonctionnalisation poreuse, par exemple en SiOCH, est formée au moins sur la face supérieure de la partie suspendue du NEMS de préférence par CVD. Cette couche a une épaisseur comprise entre 10 nm et 200 nm. La réalisation de cette couche se fait selon le mode décrit ci-dessus. La couche de fonctionnalisation se dépose également sur les zones adjacentes à la partie suspendue, mais seule la zone sensible est utile au capteur.

L'élément ainsi obtenu est représenté sur la figure 5F.

L'invention offre donc un capteur gravimétrique de type NEMS à limite de détection abaissée. En outre, un procédé de réalisation avantageux permet d'éviter les risques de stiction entre la partie suspendue et la partie fixe.

**Revendications**

1. Capteur de gaz gravimétrique comportant une structure électronique comprenant :

   - une partie fixe (2),
   - au moins une partie suspendue (4) par rapport à la partie fixe (2),
   - des moyens d'excitation arrangés pour mettre en vibration la partie suspendue par rapport à la partie fixe,
   - des moyens de détection des variations de vibration de ladite partie suspendue,
   - une couche de fonctionnalisation poreuse (6) destinée à absorbée les molécules de gaz à détecter recouvrant une partie au moins de la partie suspendue (4),

   ladite couche de fonctionnalisation poreuse (6) ayant une porosité comprise entre 3% et 50%,
   **caractérisé en ce que** la structure électronique est une structure nanoélectronique et **en ce que** la couche de fonctionnalisation (6) est en un matériau de type SiOxCyHz, avec

   - x compris entre 1 et 2, de préférence entre 1,4 et 1,8,
   - y compris entre 0,8 et 3, de préférence entre 1 et 2,5,
   - z compris entre 2,5 et 4,5, de préférence entre 3 et 4,1.

2. Capteur de gaz gravimétrique selon la revendication 1 dans lequel la porosité de la couche de fonctionnalisation (6) est comprise entre 5% et 40%.

3. Capteur de gaz gravimétrique selon la revendication 1 ou 2, dans lequel l'épaisseur de la couche de fonctionnalisation (6) est comprise entre 10 nm et 200 nm.

4. Capteur de gaz gravimétrique selon l'une des revendications 1 à 3, dans lequel la couche de fonctionnalisation est présente sur au moins une partie d'une face de la partie suspendue (4) opposée à la partie fixe (2), avantageusement sur toute la face de la partie suspendue (4) opposée à la partie fixe (2).

5. Capteur de gaz gravimétrique selon l'une des revendications 1 à 4, dans lequel les moyens d'excitation sont des moyens électrostatiques.

6. Capteur de gaz gravimétrique selon l'une des revendications 1 à 5, dans lequel les moyens de détection sont des moyens piézoélectriques.

7. Ensemble d'analyse comportant une colonne de chromatographie en phase gazeuse et au moins un capteur de gaz gravimétrique selon l'une des revendications 1 à 6 disposé en sortie de ladite colonne.

8. Procédé de réalisation d'un capteur de gaz gravimétrique selon l'une des revendications 1 à 6, comportant :

   - la réalisation de la structure nanoélectronique,
   - la formation de la couche de fonctionnalisation (6) présentant une porosité comprise entre 3% et 50%, sur une partie au moins de la partie suspendue de la structure nanoélectronique.

9. Procédé de réalisation selon la revendication 8, dans lequel la formation de la couche de fonctionnalisation est obtenue par dépôt chimique en phase vapeur.

10. Procédé de réalisation selon la revendication 9, dans lequel lors du dépôt chimique en phase vapeur un agent porogène est mis en œuvre.

11. Procédé de réalisation selon la revendication 10, dans lequel le niveau de porosité est fixé en fonction du débit de porogène.

12. Procédé de réalisation selon la revendication 10 ou 11, dans lequel l'agent porogène comporte des molécules organiques telles que le Norbornadiène, le norbornène, l'alpha terpinène, le cyclohexène oxyde, le cyclopentène oxyde, le trivertal.

13. Procédé de réalisation selon l'une des revendications 8 à 12, dans lequel la formation de la couche de fonctionnalisation (6) est obtenue en introduisant dans une enceinte un précurseur et un agent porogène, en appliquant un traitement plasma et ensuite en effectuant un traitement thermique pour oxyder l'agent porogène.

14. Procédé de réalisation selon l'une des revendications 8 à 13, dans lequel la formation de la couche de fonctionnalisation a lieu après libération de la structure nanoélectronique.

**Patentansprüche**

1. Gravimetrischer Gassensor mit einer elektronischen Struktur, umfassend:

   - einen festen Teil (2),
   - wenigstens einen aufgehängten Teil (4) in Bezug auf den festen Teil (2),
   - Erregungsmittel, welche dazu angeordnet sind, den aufgehängten Teil relativ zum festen Teil in Schwingung zu versetzen,
   - Mittel zum Erfassen von Schwingungsänderungen des aufgehängten Teils,
   - eine poröse Funktionalisierungsschicht (6), welche dazu bestimmt ist, die zu detektierenden Gasmoleküle zu absorbieren und die wenigstens einen Teil des aufgehängten Teils (4) bedeckt, wobei die poröse Funktionalisierungsschicht (6) eine Porosität zwischen 3 % und 50 % aufweist,

   **dadurch gekennzeichnet, dass** die elektronische Struktur eine nanoelektronische Struktur ist und dass die Funktionalisierungsschicht (6) aus einem Material vom Typ SiOxCyHz besteht, mit

   - x zwischen 1 und 2, bevorzugt zwischen 1,4 und 1,8,
   - y zwischen 0,8 und 3, bevorzugt zwischen 1 und 2,5,
   - z zwischen 2,5 und 4,5, bevorzugt zwischen 3 und 4,1.

2. Gravimetrischer Gassensor nach Anspruch 1, wobei die Porosität der Funktionalisierungsschicht (6) zwischen 5 % und 40 % liegt.

3. Gravimetrischer Gassensor nach Anspruch 1 oder 2, wobei die Dicke der Funktionalisierungsschicht (6) zwischen 10 nm und 200 nm liegt.

4. Gravimetrischer Gassensor nach einem der Ansprüche 1 bis 3, wobei die Funktionalisierungsschicht zumindest auf einem Teil einer dem feststehenden Teil (2) gegenüberliegenden Fläche des aufgehängten Teils (4), vorteilhafterweise auf der gesamten, dem feststehenden Teil (2) gegenüberliegenden Fläche des aufgehängten Teils (4) vorhanden ist.

5. Gravimetrischer Gassensor nach einem der Ansprüche 1 bis 4, wobei die Erregungsmittel elektrostatische Mittel sind.

6. Gravimetrischer Gassensor nach einem der Ansprüche 1 bis 5, wobei die Detektionsmittel piezoelektrische Mittel sind.

7. Analyseanordnung mit einer Gaschromatographiesäule und wenigstens einem gravimetrischen Gassensor nach einem der Ansprüche 1 bis 6, der am Ausgang der Säule angeordnet ist.

8. Verfahren zur Herstellung eines gravimetrischen Gassensors nach einem der Ansprüche 1 bis 6, umfassend:

   - die Herstellung der nanoelektronischen Struktur,
   - die Bildung der Funktionalisierungsschicht (6) mit einer Porosität zwischen 3 % und 50 % auf wenigstens einem Teil des aufgehängten Teils der nanoelektronischen Struktur.

9. Herstellungsverfahren nach Anspruch 8, wobei die Ausbildung der Funktionalisierungsschicht durch chemische Gasphasenabscheidung erfolgt.

**10.** Herstellungsverfahren nach Anspruch 9, wobei während der chemischen Gasphasenabscheidung ein Treibmittel verwendet wird.

**11.** Herstellungsverfahren nach Anspruch 10, wobei der Porositätsgrad in Abhängigkeit von dem Treibmitteldurchfluss festgelegt wird.

**12.** Herstellungsverfahren nach Anspruch 10 oder 11, wobei das Treibmittel organische Moleküle wie Norbornadien, Norbornen, alpha-Terpine, Cyclohexenoxid, Cyclopentenoxid, Trivertal umfasst.

**13.** Herstellungsverfahren nach einem der Ansprüche 8 bis 12, wobei die Bildung der Funktionalisierungsschicht (6) durch Einbringen eines Vorläufers und eines Treibmittels in eine Kammer, Anwendung einer Plasmabehandlung und anschließende Durchführung einer Wärmebehandlung zur Oxidation des Treibmittels erreicht wird.

**14.** Herstellungsverfahren nach einem der Ansprüche 8 bis 13, wobei die Bildung der Funktionalisierungsschicht nach Freisetzung der nanoelektronischen Struktur erfolgt.

**Claims**

**1.** Gravimetric sensor comprising an electronic structure comprising:

- a fixed part (2),
- at least one part (4) suspended from the fixed part (2),
- excitation means arranged to vibrate the suspended part relative to the fixed part,
- means of detecting variations in vibration of said suspended part,
- a porous functionalisation layer (6) intended to absorb gas molecules to be detected covering at least partially the suspended part (4), said porous functionalisation layer (6) having a porosity between 3% and 50%.

**characterized in that** the electronic structure is a nanoelectronic structure and **in that** the functionalisation layer (6) is made of a SiOxCyHz type material, where

- x is between 1 and 2, preferably between 1.4 and 1.8,
- y is between 0.8 and 3, preferably between 1 and 2.5,
- z is between 2.5 and 4.5, preferably between 3 and 4.1.

**2.** Gravimetric sensor according to claim 1 in which the porosity of the functionalisation layer (6) is between 5% and 40%.

**3.** Gravimetric sensor according to claim 1 or 2, in which the thickness of the functionalisation layer (6) is between 10 nm and 200 nm.

**4.** Gravimetric sensor according to one of claims 1 to 3, in which the functionalisation layer is present on at least part of a face of the suspended part (4) opposite the fixed part (2), advantageously over the entire face of the suspended part (4) opposite the fixed part (2).

**5.** Gravimetric sensor according to one of claims 1 to 4, in which the excitation means are electrostatic means.

**6.** Gravimetric sensor according to one of claims 1 to 5, in which the detection means are piezoelectric means.

**7.** Analysis assembly comprising one gas phase chromatography column and at least one gravimetric sensor according to one of claims 1 to 6 placed at the outlet from said column.

**8.** Method of manufacturing a gravimetric sensor according to one of claims 1 to 6, comprising:

- manufacturing the nanoelectronic structure,
- formation of the functionalisation layer (6) with a porosity of between 3% and 50%, over at least part of the suspended part of the nanoelectronic structure.

**9.** Manufacturing method according to claim 8, in which the functionalisation layer is obtained by chemical vapour phase deposition.

10. Manufacturing method according to claim 9, in which a porogenic agent is used during the chemical vapour phase deposition.

11. Manufacturing method according to claim 10, in which the porosity level is fixed as a function of the porogen flow.

12. Manufacturing method according to claim 10 or 11, in which the porogenic agent comprises organic molecules, such as norbornadiene, norbornene, alpha terpinene, cyclohexene oxide, cyclopentene oxide, trivertal.

13. Manufacturing method according to one of claims 8 to 12, in which the functionalisation layer (6) is obtained by adding a precursor and a porogenic agent into a chamber, applying a plasma treatment and then performing a heat treatment to oxidise the porogenic agent.

14. Manufacturing method according to one of claims 8 to 13, in which the functionalisation layer is formed after the nanoelectronic structure has been released.

FIG.1A

FIG.1B

FIG.2

Benzène

FIG.3A

Toluène

FIG.3B

FIG.3C

FIG.3D

FIG.4A

FIG.4B

FIG.4C

FIG.4D

106
104
102

FIG.5A

106
104
102

FIG.5B

108
110
106
104
102

FIG.5C

112
108
106
104
102

FIG.5D

2
4
112
106
104
102

FIG.5E

2
4
6
112

FIG.5F

**EP 3 087 386 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011113855 A
- FR 2918997